Europäisches Patentamt

European Patent Office

Office européen des brevets

(11) Numéro de publication: **0 032 851**
A1

## (12) DEMANDE DE BREVET EUROPEEN

(21) Numéro de dépôt: 81400002.2

(22) Date de dépôt: 06.01.81

(51) Int. Cl.³: **B 65 G 7/04**, B 23 Q 1/26

(30) Priorité: **14.01.80 FR 8000689**

(43) Date de publication de la demande: **29.07.81**
**Bulletin 81/30**

(84) Etats contractants désignés: **AT BE CH DE GB IT LI NL SE**

(71) Demandeur: **Dussud, Jean-Benoît, 12, rue Champ Rochas, F-38240 Meylan (FR)**

(72) Inventeur: **Dussud, Jean-Benoît, 12, rue Champ Rochas, F-38240 Meylan (FR)**

(74) Mandataire: **Flechner, Willy, c/o CABINET FLECHNER 63, Avenue des Champs Elysées, F-75008 Paris (FR)**

(54) Installation de manutention par table à billes.

㉗ Installation de manutention par table à billes comprenant une table sur le plateau 1 horizontal de laquelle roulent librement des billes 2 de même diamètre permettant de déplacer une charge C. Grâce, à des supports 7 et 8 passant dans des passages 3, percés dans le plateau 1, on peut immobiliser la charge C.

EP 0 032 851 A1

## Installation de manutention par table à billes.

La présente invention est relative à une installation de manutention par table à billes.

Au brevet français 78 34102, on décrit une installation pour manutentionner ou déplacer des charges ou pour les faire pivoter sur elles-mêmes comprenant une table à plateau horizontal sur lequel roulent librement des billes de même diamètre. Il n'existe aucune direction d'avancement privilégiée. Les frottements sont tellement diminués que l'on peut faire changer de direction des objets lourds ou à fond mou que les tables à billes antérieures ne permettaient même pas de déplacer dans une direction privilégiée.

Il est souvent souhaitable d'effectuer sur la charge une opération qui en nécessite l'immobilisation. L'invention perfectionne la table à billes du type mentionné ci-dessus en permettant au choix d'y immobiliser une charge ou de la déplacer.

La table suivant l'invention, est caractérisée par trois passages, non alignés, débouchant sur le plateau, pour trois supports escamotables, et par des moyens pour élever les sommets des supports au dessus des billes.

En élevant les supports, on soulève la charge et on l'immobilise.

Pour éviter tout blocage du support par une bille tombant dans le passage, toute distance entre les parois d'un passage et d'un support est supérieure au diamètre des billes, où que se trouve le support dans le passage.

Néammois, il vaut mieux que les ouvertures des passages sur le plateau soient aussi petites que possible, puisqu'elles représentent des endroits où les billes quittent la table. A cet effet, le support comprend avantageusement la tige d'un vérin, apte à lever une charge lourde, prolongée d'un poussoir de plus petit diamètre ou section droite et autorisant donc un passage de petite dimension, mais néammois suffisamment résistant à la flexion, parce que la longueur en est petite.

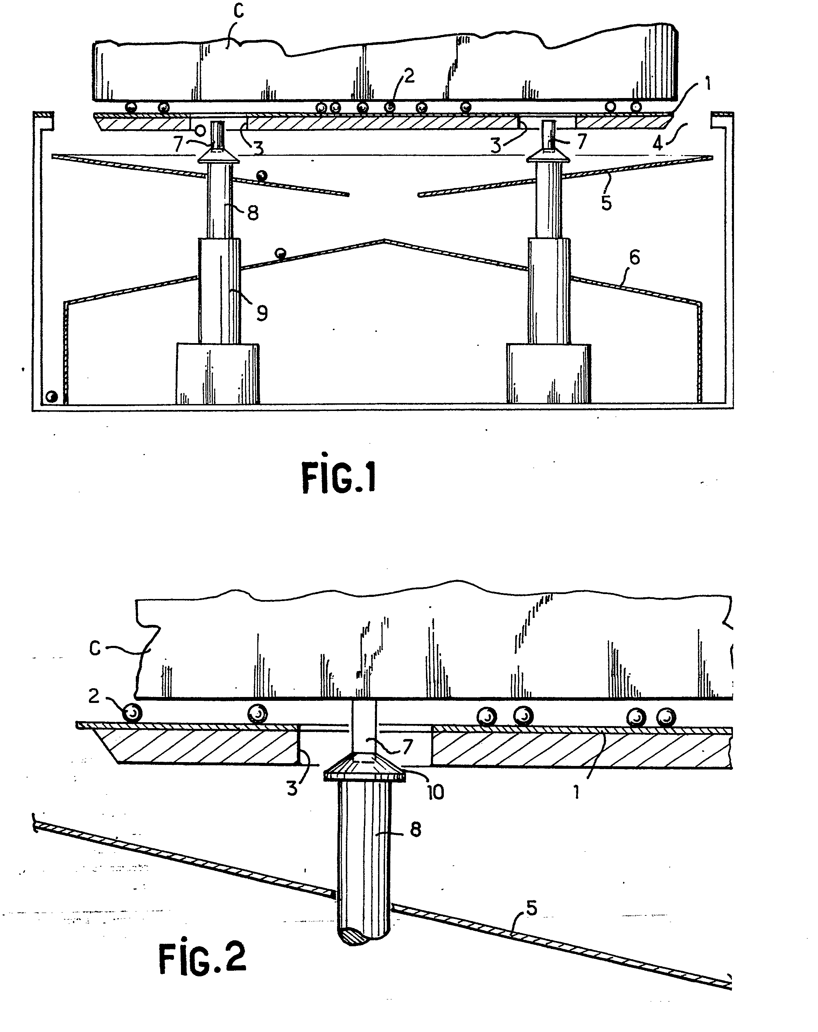

La figure 1 est une vue en coupe d'une installation suivant l'invention, alors que les supports sont escamotés sous la table, tandis que

La figure 2 en est une vue partielle à échelle agrandie, alors que les supports élèvent et maintiennent une charge.

L'installation comprend une table carrée dont le plateau 1 horizontal, sur lequel roulent librement des billes 2 de même diamètre portant une charge C, est percé de quatre passages 3 aux quatre coins d'un carré imaginaire.

Des fosses 4, ménagées aux bords de la table, débouchent sur un répartiteur des billes présentant des rampes 5 et un cône 6.

Dans chaque passage 3 peut s'élever un poussoir 7 terminal, cylindrique, fixé à la tige 8 cylindrique d'un vérin 9.

Le poussoir 7 a un diamètre bien plus petit que celui de la tige 8 et une longueur bien plus faible que celle-ci. L'épaulement entre le poussoir 7 et la tige 8 est dissimulé par un chapeau 10 tronconique évasé vers le bas.

Quelle que soit la position du poussoir 7, toute distance entre le support, constitué par le poussoir 7, par la tige 8 et par le chapeau 10, et le passage 3, percé dans le plateau 1 de la table, est supérieur au diamètre des billes 2.

Pour immobiliser la charge C, on l'élève par les quatre supports, au-dessus des billes 2. Celles-ci ne peuvent, en raison de leur diamètre, ni se coïncer dans les passages 3, ni s'immobiliser sur les rampes 5 et sur le cône 6, puisque la tige 8 et le vérin 9 cylindriques sont en contact avec les rampes 5 et avec le cône 6 par des lignes convexes.

Revendications de brevet

1. Installation de manutention de charges, comprenant une table à plateau horizontal sur lequel roulent librement des billes de même diamètre, caractérisée par trois passages, non alignés, débouchant sur le plateau, pour trois supports escamotables et par des moyens pour élever les sommets des supports au-dessus des billes.

2. Installation suivant la revendication 1, caractérisée en ce que toute distance entre les parois d'un passage et d'un support est supérieure au diamètre des billes.

3. Installation suivant la revendication 1 ou 2, caractérisée en ce que chaque support est terminé par un poussoir de faible section droite et de faible longueur par rapport à celles de la tige d'un vérin à laquelle il est fixé.

4. Installation suivant l'une des revendications 1 à 3, caractérisé en ce que chaque support est conique en étant évasé vers le bas.

5. Installation suivant l'une des revendications 1 à 4, comprenant un répartiteur de billes sous la table, caractérisée en ce que chaque support traverse le répartiteur et les zones de contact des supports avec le répartiteur sont convexes.

0032851

1/1

FIG.1

FIG.2

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendica-tion concernée |
|---|---|---|
| A | <u>CH - A - 292 868</u> (A. QUARTIER-LA-TENTE) | 1 |
| A | <u>FR - A - 1 559 673</u> (CUVILLIER) | 1 |

---

**CLASSEMENT DE LA DEMANDE (Int. Cl.³)**

B 65 G 7/04
B 23 Q 1/26

**DOMAINES TECHNIQUES RECHERCHES (Int. Cl.³)**

B 65 G
B 23 Q

**CATEGORIE DES DOCUMENTS CITES**

X: particulièrement pertinent

A: arrière-plan technologique

O: divulgation non-écrite

P: document intercalaire

T: théorie ou principe à la base de l'invention

E: demande faisant interférence

D: document cité dans la demande

L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 21-04-1981 | VAN ROLLEGHEM |

OEB Form 1503.1   06.78